# EUROPEAN PATENT APPLICATION

(11) **EP 3 028 849 A1**
(43) Date of publication of application: **08.06.2016**
(21) Application number: 14004074.2
(22) Date of filing: 03.12.2014
(51) Int. Cl.: B32B 11/00, C09D 195/00, C09J 195/00, C08L 61/00, C08L 95/00, C08L 91/06, C08K 3/34, C08K 5/01, C08K 5/09, D06N 5/00

(54) **Method for producing veneer products**

(71) Applicant: surfactor Germany GmbH, 45141 Essen (DE)
(72) Inventor: Lipponen, Juha, 82500 Kitee (DE); Silventolnen, Ilpo, 59800 Kesälahti (DE)
(74) Representative: von Renesse, Dorothea

(57) **Abstract**

The present invention relates to a method of joining veneers together as well as a veneer product prepared according to said method.

## Description

### FIELD OF THE INVENTION

The present invention relates to a method of joining veneers together. The method includes the use of a layered material which comprises a carrier material coated or saturated with bitumen and resin for forming the veneer product. The invention further relates to the veneer product prepared according to said method.

### BACKGROUND OF THE INVENTION

In the wood-processing industry wood veneers and products derived therefrom constitute materials of increasing importance. During peeling and sorting processes considerable amounts of wet pieces of veneer are generated with a typical length between 20 and 40 cm. For the further use of these pieces they have to be dried. Since common drying machines are designed for the handling of veneer sheets with a length between 2.5 and 3 meters, it is necessary to join the shorter pieces to larger veneer sheets.

Methods for joining veneer pieces to larger sheets are state of the art. Known machines for composing veneers and veneer products such as the Meinan Tape Edge Composer (Meinan Machinery Works Inc., Japan) use a paper based carrier material with an adhesive coating on one side. Therewith small pieces of adhesive material (tapes) are hot pressed on both sides of butt-joined veneers using temperatures of between 250°C and 300°C. This connection, however, is not strong enough to withstand the harsh conditions of handling and drying.

These disadvantages also occur when using adhesive tapes consisting of paper saturated with an adhesive resin for producing veneer products. Hence, prior art materials usually suffer from insufficient strong connection and bonding of constituents, as evident from an insufficient or reduced shear strength, which considerably influences and restricts storage, service durability and, in particular, processability of resulting veneer products. This especially applies in case the veneer sheets to be processed have a high moisture content of up to 100% or even more.

There is currently no method available that is able to compose wet veneer pieces or sheets to a larger veneer product which satisfactorily withstands the subsequent harsh drying conditions. Hence there is a need of improved veneer products, in particular for composing and processing veneer sheets for forming veneer products with sufficiently strong connecting between the materials to be connected.

### SUMMARY OF THE INVENTION

This problem is solved by providing a novel method of joining veneers together, wherein a layered material comprising a carrier material and bitumen and resin is used for joining the veneers together. Said method comprises the steps of providing two or more pieces of veneer. Said method further comprises the step of connecting abutting edges of said at least two pieces of veneers with the layered material and the step of composing the layered material to the pieces of veneer by heat and pressure. The layered material comprises a carrier material, which is either coated or saturated with bitumen and resin.

Specific embodiments of the invention are subject matter of further dependent claims. The invention further relates to a veneer product, preferably a composite material, prepared according to said method.

According to the method of the invention a layered material is used which comprises a carrier material, which is coated or saturated with bitumen and a resin. The inventors have found that such a layered material enables a firm bonding of a veneer sheet to the carrier material even if the veneer sheet has a moisture content of up to 100% or even more (i.e. even if the water is dripping off the veneer).

According to the invention the bitumen acts as a blocking layer which prevents moisture emerging from the veneer to the carrier material. The carrier material often is a moisture sensitive material, such as paper. Hence the resulting veneer product comprising the layered material of the invention and the veneer remains firmly bond even if the veneer is wet. Consequently, the veneer products produced according to the method of the present invention can be stored for several hours or days.

It was found by the inventors that bitumen is compatible with resins, which are commonly used in the production of veneer products. This in particular applies to phenol and formaldehyde-based resins, which are frequently used. In addition the bitumen being, according to the invention, a part of the layered material does not interfere with the hot pressing technology, which is often used to establish the bonding of the carrier material to the veneer.

Due to the satisfying compatibility of bitumen with wooden materials, such as veneers, on the one hand and with resin compositions on the other hand, carrier materials coated or saturated with bitumen can be used for joining wood (veneer) materials and resin coated materials. This makes the layered material suitable as an adhesive tape for the wood working industry, especially for joining veneers with the method according to the present invention.

Another advantage is the high flexibility of the layered material. It provides enough strength during drying and handling of the veneer product but at the same time the veneer product remains sufficiently flexible so that the product can be handled without risking ruptures of the veneer sheet.

Due to its compatibility with resin compositions the bitumen can be used to partly substitute the resin (often phenolic or formaldehyde based resins) within the layered material used in the method according to the present invention. Since bitumen is a by-product of coking the partly substitution of resin by bitumen can significantly reduce the production costs for veneer products.

The inventors could show that the partly substitution of adhesive by bitumen according to the method of the present invention does not negatively impact the quality of the layered material and resulting veneer product produced therewith. In addition, the layered material comprising bitumen can increase the resistance of such products against chemicals.

### DETAILED DESCRIPTION OF THE INVENTION

According to the invention a method is provided of joining veneers together comprising the steps of:
a) providing two or more pieces of veneer,
b) connecting abutting edges of said at least two pieces of veneers with a layered material, said layered material is preferably an adhesive tape, more preferably in form of patches,
c) composing the layered material to the pieces of veneer by heat and pressure, preferably by hot-pressing.

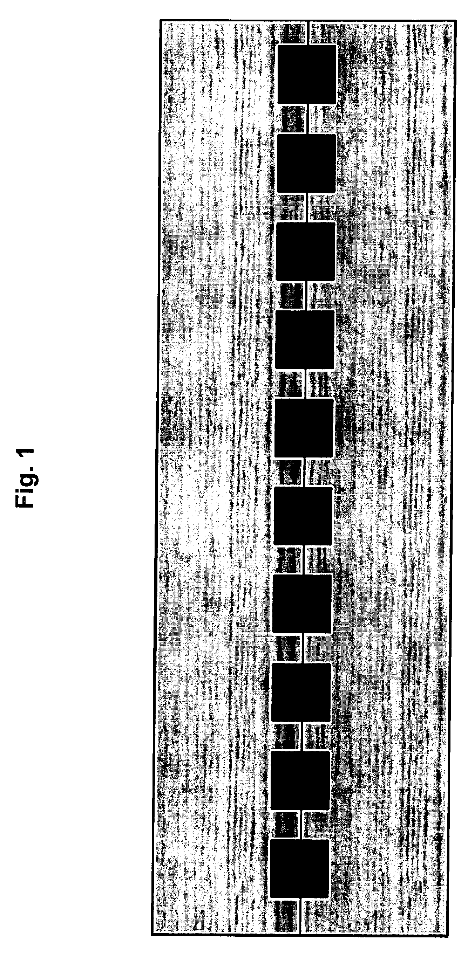

In a preferred embodiment one or more adhesive patches (i.e. patches of adhesive tape) are used for step b) so that the patches connect the pieces of. When using patches, it is preferred that the individual patches are applied to the pieces of veneer with certain spacing between them (see Figure 1). As a result less adhesive material is required and thickness tolerances and unevenness can be compensated more easily.

The term "hot pressing" is well known to the skilled person in the respective art and generally refers to the concomitant application of heat and pressure. According to the present invention, hot pressing preferably refers to the concomitant application of pressures between 3 bar and 35 bar along with temperatures of between 90°C and 400°C.

Preferably, step c), i.e. the assembly of the layered material (being preferably an adhesive tape, more preferably in form of patches) and the veneer, is performed at a temperature between 100°C and 350°C. The pressure is preferably between 3 bar and 30 bar. Hence, step c) is preferably performed at a temperature between 100°C and 350°C and a pressure between 3 bar and 30 bar. In one embodiment of the invention the assembly of the layered material and the veneer is performed at a temperature between 100°C and 350°C and a pressure between 10 bar and 30 bar.

More preferably, the temperature is between 150°C and 340°C and most preferably between 250°C and 320°C and further preferred between 270°C and 310°C. Pressing time is preferably at least 1 second and further preferred at least 2 seconds. According to the present invention, pressing times of at most 20 seconds, further preferably at most 10 seconds are already sufficient, which further allows for a cost-effective and environment-friendly processing. In especially preferred embodiments, pressing time is between 2 seconds and 10 seconds, in particular 4 seconds. Pressures of between 3 bar and 20 bar, preferably of between 3 bar and 15 bar, further preferred of between 4 bar and 10 bar may be applied. In one embodiment of the invention, pressures of 5 bar along with temperatures of 300°C are applied in step c).

Width of the pieces of veneer used depends on the veneers width coming from lathe; length of the pieces of veneer has no limitation. The pieces of veneer can, for example, have a width of typically between 1.3 m and 1.6 m. Length (length means dimension in cross direction of wood fibers) can be, for example, between 20 cm and 60 cm.

In a preferred embodiment the pieces of veneer are joined by means of butt-joining which can allow for further improved bonding of constituents. "Butt-joining" as used herein refers to a joining of pieces of veneer whereby the neighbouring pieces of veneer do not overlap but are joined edge-to-edge.

The layered material used in step b) comprises a carrier material either coated or saturated with bitumen and resin. The terms "coating" and "saturating" are known to the skilled person in the art, too. Coating preferably means the application of a composition which forms a layer on the material to be coated, for example, the carrier material. The composition which is applied preferably essentially remains on the surface of the material to be coated. Preferably, coating means that less than 40% by weight, more preferably less than 35% by weight, further preferably less than 30% by weight and most preferably less than 20% by weight of the composition penetrates into the material to be coated. With the coating, i.e. preferably with the formed layer, preferably at least 5 g/m², in particular at least 8 g/m² and more preferably at least 10 g/m² in a weight per unit area of composition may be applied onto one side or on one side and the opposite side of the material onto which the coating is to be applied.

"Saturation" with a composition preferably means that the material to be saturated is brought into contact with the composition, wherein the composition essentially penetrates into the material to be saturated, i.e. does essentially not remain on the surface of the material. Preferably, saturating means that more than 60% by weight, more preferably more than 65% by weight, further preferably more than 70% by weight and most preferably more than 80% by weight of the composition penetrates into the material to be saturated with said composition. More preferably, more than 90% by weight and further preferred more than 95% by weight penetrates into the material to be saturated with said composition. In particular embodiments even between 98% by weight and 100% by weight of the composition penetrates into the material to be saturated. Preferably, at least 5 g/m², in particular at least 8 g/m² in a weight per unit area of composition is applied to one side or to said side and the opposite side of the material to be saturated with the composition, preferably to one side of the material.

"Bitumen" as used according to the present invention is a generic term for oil based semisolid hydrocarbon products produced by removing the lighter fractions (such as liquid petroleum gas, petrol and diesel) from heavy crude oil during the refining process (distillation). Unless otherwise explicitly indicated this term encompasses also "bituminous products", "bitumen preparations" and "bitumen emulsions". I.e. the term "bitumen" always designates a composition, for example in form of a solution.

Bituminous products and bitumen preparations relate to bitumen mixtures (preparations) with improved handling and application characteristics, or with enhanced physical properties. In such products bitumen is often the principal component, but they can contain significant proportions of other materials. The most commonly used bituminous products are:
Cut-back bitumen: Cut-backs are bitumen preparations in which the viscosity of the binder has been reduced by the addition of a volatile solvent, normally derived from petroleum.

Typically the solvents used are white spirit and kerosene.

Fluxed bitumen: Fluxed bitumens are bitumen preparation where the viscosity of the binder has been reduced by the addition of relatively non-volatile oils. Typical fluxants include gas oil and vegetable based oils.

According to the present invention, a modified bitumen may also be used. The term "modified bitumen" according to the invention refers to a bitumen, in which an agent selected from the group consisting of a wax, silicone oil, stearic acid, alkene ketene dimer (AKD), alkenyl succinic anhydride (ASA) and mixtures thereof is added. A preferred wax is paraffin. Unless otherwise explicitly indicated the term "modified bitumen" used herewith encompasses bitumen in which at least one of said agents is added. Hence, bitumen may be modified by the inclusion, i.e. addition of at least one of said agents. In embodiments of the invention, the bitumen is a modified bitumen, wherein an agent selected from the group consisting of a wax, such as paraffin, AKD, silicone oil, ASA, stearic acid and mixtures thereof has been added in bitumen, in particular an agent selected from the group consisting of paraffin, AKD, silicone oil, stearic acid and mixtures thereof; more preferably paraffin or stearic acid.

In one embodiment, bitumen is modified by the addition of wax, in particular paraffin. In another embodiment, bitumen is modified by the addition of AKD. In still another embodiment, bitumen is modified by the addition of silicone oil. In a further embodiment, bitumen is modified by the addition of ASA. In still another embodiment, bitumen is modified by the addition of stearic acid.

The amount of the agent added in the bitumen can amount to at least 0.5% by weight, preferably at least 1% by weight, further preferably at least 1.5% by weight, more preferably at least 1.8% by weight und further preferred at least 2% by weight based on the amount of the modified bitumen. The amount of agent added in bitumen is usually at most 40% by weight, preferably at most 20% by weight und further preferred at most 15% by weight, more preferably at most 12% by weight, in particular at most 10% by weight based on the amount of the modified bitumen. In embodiments, the amount of the agent is between 1% by weight and 20% by weight, preferably between 1.8% by weight and 15% by weight and more preferably between 2% by weight and 10% by weight based on the amount of the modified bitumen. The amount of stearic acid may be between 2% by weight and 20% by weight, preferably between 2% by weight and 5% by weight, in particular 2% by weight based on the amount of the modified bitumen. The amount of silicone oil may be between 2% by weight and 20% by weight, preferably between 2% by weight and 5% by weight, in particular 2% by weight based on the amount of the modified bitumen. The amount of AKD may be between 2% by weight and 20% by weight, further preferably between 10% by weight and 20% by weight, in particular 10% by weight based on the amount of the modified bitumen. The amount of ASA may be between 2% by weight and 20% by weight, further preferably between 10% by weight and 20% by weight, in particular 10% by weight based on the amount of the modified bitumen.

The amount of wax in modified bitumen, in particular paraffin, can be at least 2% by weight, further preferably at least 4% by weight and most preferably at least 5% by weight based on the amount of modified bitumen. Usually, at most 30% by weight, further preferred at most 20% by weight and in particular at most 15% by weight based on the amount of modified bitumen of wax, in particular paraffin, is used in the modified bitumen. In one embodiment, at most 10% by weight of wax, preferably paraffin, is used in the modified bitumen. Hence in embodiments the wax, e.g. paraffin, is present in an amount of between 4% by weight and 20% by weight, in particular, of between 5 % by weight and 15 % by weight and further preferred of between 5% by and 10% by weight of the modified bitumen.

When using an emulsifier it is preferred that the emulsifier is selected so that it does not have any negative effect on hygroscopicity of the carrier material.

Bitumen emulsions are products in which droplets (the dispersed phase) of bitumen or bituminous binder are dispersed in an aqueous medium (the continuous phase). The bitumen particle charge can be positive (cationic), negative (anionic), or uncharged (non-ionic) depending on the emulsifier employed. The binder can be either a bitumen, cutback, or modified bitumen.

Bitumen preparations also encompass products whereby the bitumen or bituminous binder is diluted in an organic solvent.

Other categories of bitumen, which are also encompassed by the generic definition according to the invention, are hard bitumen, soft bitumen, straight run bitumen, high-vacuum bitumen, industrial bitumen, blown bitumen, blended bitumen, penetration bitumen or any mixture thereof.

Bitumen can also be specified according the DIN norm EN 12591 (version 2009-08). Based on said DIN norm, the bitumen can be classified according to its penetration limits and linked to a specific value of needle penetration. For a needle penetration of 0.1 mm, measured according to DIN EN 12591, the following bitumen grades are known to the skilled person and can be used for the present invention: 250/300, 160/220, 100/150, 70/100, 50/70, 40/60, 35/50, 30/45 and 20/30.

These bitumen grades exhibit a softening temperature range of 8°C. In an alternative embodiment, the bitumen grades are restricted to a softening temperature range of 6°C. In a further embodiment of the invention, the bitumen has a softening point between 70°C and 145°C, preferably between 70°C and 120°C, further preferred between 80°C and 120°C and more preferably between 90°C and 100°C. In one embodiment, the softening point of bitumen is 70°C +/- 2°C.

According to the invention, the bitumen is preferably selected from the group consisting of hard bitumen, soft bitumen, straight run bitumen, high-vacuum bitumen, industrial bitumen, blown bitumen, blended bitumen, penetration bitumen, and any mixture thereof and bituminous products, bitumen emulsions and bitumen preparations thereof. More preferably, the bitumen comprises and most preferably consists of a modified bitumen, further preferably a modified blown bitumen.

In a preferred embodiment of the invention the bitumen is applied as molten bitumen. Preferably the molten bitumen is heated for the application to the carrier material to a temperature of between 70°C to 300°C, preferably between 100°C and 250°C and more preferably between 125°C and 250°C.

In another embodiment of the invention the bitumen can be applied to the carrier material in form of a solution with an organic solvent or as an emulsion (cf. *supra).*

In one embodiment of the invention the bitumen is applied to the carrier material in a weight per unit area between 10 g/m² and 60 g/m², preferably between 10 g/m² and 50 g/m², further preferred between 10 g/m² and 45 g/m², for example of 40 g/m², further preferred between 12.5 g/m² and 30 g/m² and more preferably of 15 g/m².

In a further embodiment of the invention the bitumen when coated or saturated to the carrier material at least partly penetrates into the carrier material. Preferably, it is possible to transfer any desired additives contained in the bitumen composition into the carrier material by way of penetration of the bitumen into the carrier.

According to the invention the carrier material is coated or saturated not only with bitumen but also with a resin. In a most preferred embodiment of the invention the resin of the layered material is an adhesive resin.

"Resin" as used according to the present invention is a generic term for synthetic substances given as liquids that can be cured or hardened into solids. Unless otherwise explicitly indicated this term encompasses "resin compositions", "unmodified or modified resins", resins isolated form plants or animals, synthetic resins, thermoplastic resins and thermosetting resins. Preferred are synthetic resins. Particularly preferred are thermosettings. Hence, the layered material is preferably coated or saturated with a thermosetting resin, more preferably with a formaldehyde-based resin. A "thermosetting resin" is usually defined as a substance or composition that changes irreversibly into an infusible, insoluble polymer network by curing. In contrast, thermoplastics are usually defined as plastic materials, typically polymers that become pliable or mouldable above a specific temperature and solidify upon cooling.

The thermosetting resin may be selected from a formaldehyde-based resin, acetal resin, polyester resin, vinylester, acrylic resin or epoxy resin. The thermosetting resin may be an unmodified or a modified resin. For example the melamine-formaldehyde resin may be modified e.g. by glycol, caprolactam, acetoguanamine, benzoguanamine or p-toluene-sulphonamide, by alkylation or etherification.

In a particularly preferred embodiment of the invention the carrier material is coated or saturated with a thermosetting resin, being a formaldehyde-based resin. The formaldehyde-based resin is preferably selected from the group consisting of melamine-formaldehyde resin (MF), phenol-formaldehyde resin (PF), urea-formaldehyde resin (UF), melamine-urea-formaldehyde resin (MUF), phenol-resorcinol-formaldehyde (PRF) and a combination thereof. Especially preferred is the use of melamine-formaldehyde resin (MF) or a phenol-formaldehyde resin (PF) or a MF-PF blend, most preferably a phenol-formaldehyde resin or melamine-formaldehyde resin, in particular a phenol-formaldehyde resin.

The phenol-formaldehyde resin may be modified e. g. by urea, melamine, lignin, resorcinol, modified phenol, cresol, bisphenol or other equivalent compound. Any amino and phenolic resins known per se may be used for the formaldehyde-based resins. By combining different types of resins, e. g. phenolic and amino resins, together in a suitable ratio, it is possible to improve and optimize the properties of the resin. In the resin mixture, any solvent in which the resin is soluble may be used as the solvent for the resin.

The resin composition can contain additives, e.g. selected from the group consisting of wax, surfactants, softeners, hardeners, wetting agents, anti-foam agents, diluents and/or alkali or mixtures thereof.

In a preferred embodiment, the bitumen composition contains a suitable resin, e. g. melamine, urea and/or phenolic resin. This composition can provide better penetration of the bitumen into the carrier material.

In one embodiment of the invention the adhesive resin on the carrier material is cured, preferably completely cured, before the wood product, e.g. the veneer, is attached to said carrier material. A curing prior attaching the wood product to the carrier material avoids extensive absorption of the resin into the wood product. The cured resin then establishes the formation of an adhesive bond between the carrier material and the wood product, in particular a wood-based veneer.

The resin, in particular if cured, is especially suitable for generating the bonding to a wet wood product, e.g. a material with a moisture content of up to 100% or more. The cured adhesive can absorb water from the wet material. After heating this leads to a particular firm bonding.

In one embodiment of the invention the resin, in particular the adhesive resin, is applied to the carrier material in a weight per unit area between 5 g/m² and 50 g/m², preferably between 5 g/m² and 40 g/m², preferably between 10 g/m² and 30 g/m² and more preferably between 15 g/m² and 25 g/m², in particular of 25 g/m². Preferably, the resin layer comprises or consists of a resin. In an alternative embodiment the resin layer may also comprise paper, preferably kraft paper, which is saturated or coated with the resin.

The bitumen and the resin are applied onto a carrier material (cf. *supra).* Hence, a carrier material which forms part of the layered material is any material than can be coated or saturated with bitumen and resin. The carrier material of the layered material can be selected from the group consisting of paper, in particular kraft paper or sack paper, card board, glass fibre, textiles including woven and non-woven fabrics, plastics including rigid foam and foam plastic, mineral material such as ceramics or cellular concrete, metal such as metal foils, wood products, such as wood-based panel and wood composite. Most preferably, the carrier material is a paper, in particular kraft paper. Preferably, a carrier material present in the layered material used in step b) according to the present invention constitutes a carrier layer, i.e. the carrier material of the layered material is preferably present in form of a carrier layer.

As used herein the term "paper" is defined as a material mainly consisting of cellulose pulp, derived mainly from wood, rags, or certain grasses, e.g. processed into flexible sheets or rolls by deposit from an aqueous suspension.

In one embodiment of the invention the carrier material, in particular paper, has a weight per unit area between 40 g/m² and 250 g/m², preferably between 50 g/m² and 125 g/m² and more preferably between 60 g/m² and 110 g/m², further preferred of 80 g/m² to 100 g/m², in particular the carrier material is a kraft paper of 100 g/m² or 110 g/m², more preferably a kraft paper of 100 g/m².

The layered material comprises a carrier material which is coated or saturated with bitumen and resin. The bitumen and the resin can be mixed before being coated onto the carrier material. In this embodiment of the method according to the invention the bitumen and the resin are applied onto the carrier material as one composition. Thus, in a simplest embodiment, the layered material consists of a carrier material being attached to a second layer, which is formed by a composition of bitumen and resin having been applied to the carrier material.

Preferably, the carrier material is at first coated or saturated with bitumen and, in a second step, is further coated or saturated with resin. In this embodiment, the layered material can comprise at least three layers, i.e. the carrier material, the bitumen layer and the resin layer.

Other embodiments in which the layered material has multiple layer structures are possible. However, also with a layered material having multiple layer structures it is preferred that the resin layer is formed by coating with an adhesive resin and that this adhesive layer constitutes an outermost layer of such layered material. If the adhesive layer is the outermost layer is can easily be used to attach the layered material to a veneer.

The bitumen and/or the resin can be applied onto the carrier material, preferably a paper, i.e. the carrier material may be coated or saturated with bitumen and resin, in a manner known *per* se, e.g. by hot pressing or by means of a hot-roller. Temperatures of between 100°C and 200°C, preferably of between 110°C and 180°C, more preferably between 120°C and 150°C and most preferably at 135°C may be used. Pressures of between 5 bar and 25 bar, more preferably of between 7 bar and 22 bar and most preferably of between 9 bar and 20 bar may be applied. Temperature and/or pressures may be applied for at least 1 minute up to at most 20 minutes, more preferably at least 2 minutes and at most 15 minutes and most preferably at least 4 minutes and at most 10 minutes, in particular 5 minutes.

In a particular embodiment the layered material is converted into the shape of a tape. The tape preferably has a width of 20 to 100 mm, more preferably a width of between 30 and 50 mm.

The adhesive can also be used according to the method of the present invention as a patch. The patches can be cut from the tape. The patches preferably have a length of 20 mm to 100 mm, more preferably a length of between 30 mm and 50 mm and a width of 20 mm to 100 mm, more preferably a width of between 30 mm and 50 mm. In a further preferred embodiment the patch has a size of 40 mm x 40 mm, 40 mm x 50 mm or 50 mm x 50 mm, for example, 40 mm x 50 mm.

In one embodiment of the invention, the layered material, which is preferably an adhesive tape, comprises or consists of:
1) a carrier material, preferably a carrier layer,
2) which is coated or saturated on one side with bitumen and
3) which is further coated or saturated with an adhesive resin.

In a preferred embodiment of the invention, the layered material comprises or consists of:
1) a carrier layer consisting of paper, preferably with a weight per unit area of 100 g/m²,
2) which is coated or saturated with bitumen, preferably with a weight per unit area of 15 g/m²,
3) which is further coated with an adhesive melamine formaldehyde resin, preferably with a weight per unit area of 20 g/m².

In another embodiment of the invention, the layered material, being preferably an adhesive tape, comprises or consists of:
1) a carrier layer, preferably a paper or kraft paper,
2) coated or saturated on one side with an adhesive resin, and
3) coated or saturated on the opposite side with bitumen, preferably with a weight per unit area of 15 g/m².

In a further embodiment of the invention, the layered material, being preferably an adhesive tape, comprises or consists of:
1) a carrier layer, being preferably paper or kraft paper,
2) coated or saturated with bitumen on each side,
3) an adhesive layer coated or saturated on one of the bitumized sides from 2), which is thereby preferably forming the outermost adhesive layer.

"Bitumized side" refers to the side of the carrier material which is coated or saturated with bitumen.

In a still further embodiment of the invention, the layered material, being preferably an adhesive tape, comprises or consists of:
1) a carrier layer, being preferably paper or kraft paper,
2) coated or saturated with bitumen on each side of the carrier layer,
3) an adhesive layer coated or saturated on each bitumized side from 2), preferably therewith forming two outermost adhesive layers.

The attachment/bonding between the veneer and the layered material is preferably achieved via the resin, preferably the adhesive resin of the layered material.

Within the present invention, the term "veneer" is defined as a layer with a thickness of usually not more than 2 cm or less, preferably 1.5 cm or less, more preferably 1 cm or less, more preferred less than 0.6 cm and further preferred less than 0.3 mm. Typically, it has a minimal thickness of 0.1 cm. However veneers with a thickness of about 0.1 mm exist. A veneer can be of any material, in particular of wood, paper metal or plastic. Most preferred the veneer is a wood product ("wood-based veneer"). More preferably, the wood-based veneer is of spruce and/or birch wood.

In a further aspect of the invention the method of the invention further comprises steps of preparing the layered material used in step b), preferably representing an adhesive tape. In such embodiments, the method according to the invention further comprises the steps of:
b₁) providing a carrier material, being preferably a carrier layer,
b₂) coating or saturating said carrier layer with bitumen to form at least one bitumized side,
b₃) coating or saturating the bitumized side from step b₂) with a further layer of a resin, which is an adhesive resin,
b₄) optionally curing the adhesive resin.

In one embodiment of the method according to the invention the bitumen in step b₂) and the adhesive layer of step b₃) are applied in different steps using the same impregnation machine. In an alternative embodiment these steps are performed by separate impregnation machines. In preferred embodiments, the resin is cured in step b₄) prior to further processing.

The invention further refers to a veneer product prepared according to the method described above, which preferably forms a "composite material". The latter is suitable to provide improved durability as well as processability and to satisfactorily withstand the harsh conditions during use and drying which is the result of the characteristics resulting from the processing according to the present invention. The term "veneer product" refers to the product resulting from the methods according to the invention. The veneer product is preferably a wood product, most preferably a wood based veneer.

According to the invention the term "wood product" generally refers to any product formed comprising wood-based materials. Most preferred are wood based veneers and wood based panels. The wood based panel includes wood, plywood, chipboard, fibre board, oriented strand board (OSB), glue wood, laminated veneer lumber (LVL), parallel strand lumber (PSL), oriented strand lumber (OSL) or the like.

The term "composite material" generally designates a material formed by at least two constituent materials. The composite material exhibits different physical or chemical properties like the separate constituting materials. After finishing, the composite material cannot be separated into the constituting materials without destruction. Hence the constituting materials form a new entity.

### Figure legends

- Fig. 1:: Schematic drawing showing the fixation of two veneer sheets composed with sections of the bitumized paper (black squares) of the invention yielding the veneer product.

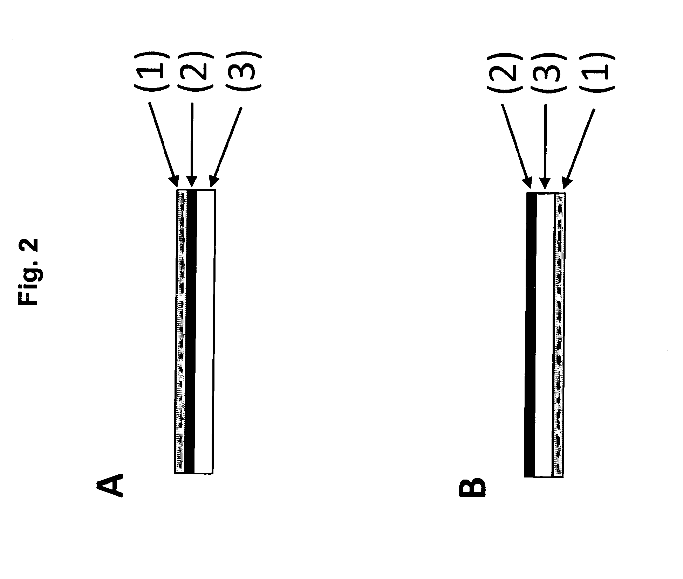

- Fig. 2:: **(A)** Schematic drawing showing a cross-section of the adhesive tape with the lower carrier material (3), the intermediate bitumen layer (2) and the overlaying adhesive layer (1)
**(B)** Schematic drawing showing a cross-section of the adhesive tape with an intermediate carrier material (3), the overlying bitumen layer (2) and the lower adhesive layer (1).

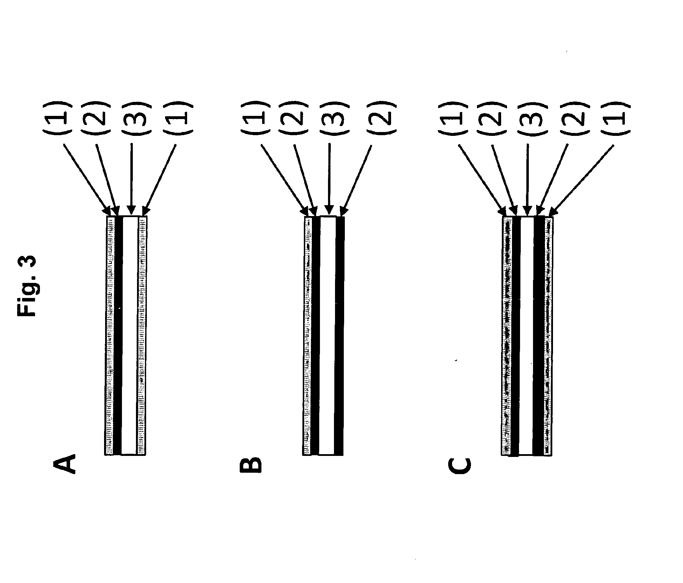

- Fig. 3:: **(A)** Schematic drawing showing a cross-section of the adhesive tape with the central carrier material (3), an overlaying bitumen layer (2) and two outermost adhesive layers (1)
**(B)** Schematic drawing showing a cross-section of the adhesive tape with an intermediate carrier material (3), coated on each side with a bitumen layer (2) and further exhibiting an outer adhesive layer (1).
**(C)** Schematic drawing showing a cross-section of the adhesive tape with an intermediate carrier material (3), coated on each side with a bitumen layer (2) and further exhibiting two outermost adhesive layers (1).

### EXAMPLES

### Example 1: Preparation and testing of veneers joined by a layered material according to the invention

### 1.1 Objective

The objective was to test three different types of paper based adhesive tapes. Tape A is a tape used according to the inventive method. Tapes B and C each represent materials used in prior art methods.

The tapes are generated as follows:
Tape A: 100 g/m² kraft paper bitumized with 40 g/m² of a bitumen having a softening point of approx. 70°C and further coated with 25 g/m² melamine resin as adhesive, whereby the melamine resin adhesive was fully cured.
Tape B: bleached 40 g/m² kraft paper not bitumized, but saturated with 80 g/m² of the melamine resin as already used for Tape A as adhesive.
Tape C: 60 g/m² natural kraft paper coated with 25 g/m² of the melamine resin already used above as adhesive.

### 1.2 Test setup

The tapes were attached to moist spruce veneers according to the method described herein with a thickness of 2.6 mm of a size of 500 mm x 150 mm. Two sheets of veneer were placed side by side in the composer. Patches of 40 mm x 50 mm of the tape were applied to overstretch the gap between the veneers (see Figure 1). The composed veneers were analyzed in a shear strength test.

The tapes were originally produced as rolls and were then cut into patches of 40 mm x 50 They were inserted manually into the seam.

Composing was carried out at a temperature of 300°C and 4 seconds pressing time while applying a pressure of 5 bar.

Shear strength test was performed by placing a test tape in a common test apparatus used for shear strength determination of wood products, wherein the jaws of the apparatus on both sides were close to the seam as possible.

### 2. Results of veneer composing

### 2.1. Visual analysis

As a result, the veneers were accurately joined by Tape A and Tape B. There were no signs of crumbling or cracking. In sum, the composing was successful with both Tapes A and B. The veneers were tested for shear strength.

### 2.2. Shear strength test

The test was carried out with 3 probes treated differentially as follows:
- The first test group was tested right after composing.
- The second test group was tested after been kept in wet stack for 24h
- The third test group was tested after been kept in wet stack for 24h and dried in a laboratory oven at a temperature of 100°C

As shown in table 1, the test results reveal that Tape A clearly has best characteristics.

**Table 1: Results of shear strength tests**

| | **Shear strength in different process steps [Newton]** | | |
|---|---|---|---|
| **Tape** | right after composing | wet stack - 24 h | wet stack - 24 h + subsequent drying |
| A | 156.8 | 102.8 | 207.4 |
| B | 76.2 | 96.2 | 61 |
| C | no data | 78.8 | 126.6 |

## Claims

1. A method of joining veneers together comprising the steps of:
a) providing two or more pieces of veneer,
b) connecting abutting edges of said at least two pieces of veneers with a layered material, wherein the layered material comprises a carrier material coated or saturated with bitumen and resin,
c) composing the layered material to the pieces of veneer by heat and pressure.

2. Method according to claim 1, wherein the veneer is a wood-based veneer.

3. Method according to claim 1 or 2, whereas step c) is performed at a temperature between 100 and 350°C and a pressure between 3 and 30 bar.

4. Method according to any one of the preceding claims, whereas step c) is performed at a temperature between 150 and 340°C and a pressure between 3 and 15 bar with a pressing time of at least 1 second and at most 20 seconds.

5. Method according to any one of the preceding claims, whereby neighbouring pieces of veneer do not overlap but are joined edge-to-edge.

6. Method according to any one of the preceding claims, whereby the resin is an adhesive resin.

7. Method according to any one of the preceding claims, wherein the resin comprises a formaldehyde-based resin, which is preferably selected from the group consisting of melamine-formaldehyde resin (MF), phenol-formaldehyde resin (PF), urea-formaldehyde resin (UF), melamine-urea-formaldehyde resin (MUF), phenol-resorcinol-formaldehyde (PRF) and a combination thereof.

8. Method according to any one of the preceding claims, whereas the bitumen is selected from the group consisting of hard bitumen, soft bitumen, straight run bitumen, high-vacuum bitumen, industrial bitumen, blown bitumen, blended bitumen, penetration bitumen, and any mixture thereof and bituminous products, bitumen emulsions and bitumen preparations thereof.

9. Method according to any one of the preceding claims, whereas the bitumen is a modified bitumen, wherein the modified bitumen is a bitumen, in which an agent selected from the group consisting of wax, in particular paraffin, silicone oil, stearic acid, alkene ketene dimer (AKD), alkenyl succinic anhydride (ASA) and mixtures thereof is added, and wherein the amount of agent added in bitumen is between 1% by weight and 20% by weight based on the amount of the modified bitumen.

10. Method according to any one of the preceding claims, whereas the bitumen has a softening point between 70°C and 145°C, preferably between 80°C and 120°C and more preferably between 90°C and 100°C.

11. Method according to any one of the preceding claims, whereas the carrier material consists of or comprises a material which is paper, preferably kraft paper.

12. Method according to any one of the preceding claims, wherein the layered material comprises or consists of:
1) a carrier layer coated or saturated with bitumen, which is
2) further coated or saturated with a resin, being preferably an adhesive resin, as outermost layer.

13. Method according to any one of the preceding claims, wherein the layered material consists of:
1) an outermost adhesive layer, preferably a phenol-formaldehyde resin with a weight per unit area of between 10 g/m² and 50 g/m² and preferably 25 g/m²,
2) an intermediate bitumen layer,
3) a carrier layer consisting of kraft paper, preferably with a weight per unit area of between 40 to 100 g/m².

14. Method according to any one of the preceding claims further comprising the step of preparing the layered material of step b), which comprises the steps of:
b₁) providing a carrier material, being preferably a carrier layer,
b₂) coating or saturating said carrier material with bitumen, preferably in a liquid form, to form at least one bitumized side,
b₃) coating or saturating the bitumized side of the carrier material from step b₂) with a further layer of a resin which is an adhesive resin,
b₄) optionally curing the adhesive resin.

15. Method according to claim 14, wherein the resin, preferably a formaldehyde-based resin, is cured in step b₄).

16. Veneer product prepared according to the method of any one of claims 1 to 15.

17. Veneer product according to claim 16, which is a wood product.
